# EUROPEAN PATENT SPECIFICATION

(11) **EP 0 557 359 B1**
(45) Date of publication and mention of the grant of the patent: **15.02.1995**
(21) Application number: 91920030.3
(22) Date of filing: 06.11.1991
(51) Int. Cl.: G06K 19/04

(54) **POCKETABLE SLIDE CARD FOR RECORDING PERSONAL CODES**
TRAGBARE SCHIEBEKARTE ZUR AUFZEICHNUNG VON PERSONALKODES
CARTE DE POCHE A ELEMENTS COULISSANTS DESTINEE A ENREGISTRER DES CODES PERSONNELS

(30) Priority: 15.11.1990 IT 6092490 U
(43) Date of publication of application: 01.09.1993
(73) Proprietor: ARUNCA LTD., Wilmington, Delaware 19801 (US)
(72) Inventor: Feresin, Carlo, I-21016 Luino (IT)
(74) Representative: Pellegri, Alberto
(86) International application number: IT9100092
(87) International publication number: WO9209053

(56) References cited:
- EP-A- 0 275 578
- CH-A- 0 372 180
- FR-A- 2 590 698

## Description

The present invention relates to a pocketable, manually operated, combinative slide card on which several confidential codes may be recorded and which may be read by composing a personal decoding code. The memorization of ever increasing in number personal codes having a strictly confidential character, e.g. personal codes for effecting automatic banking operations, account numbers, alarm system's identification codes, access codes to data banks, and the like, becomes increasingly difficult with the flourishing of systems, the access to which is controlled by means of personal codes.

The document FR-A-2590698 describes an access code support in the form of a first element containing a window pattern and a second element carrying a scrambled array of characters. The two portions or elements are normally kept sepatare. The array sheet may be retained at a certain control station, while the pattern card may be carried by the user.

The document EP-A-0275578 describes a code translation device in the form of a slide-ruler, having a plurality of slides. It enables an arbitrary character string to be displayed in two equivalent representations, for example a bar code may be translated in a human readable string of characters.

The document CH-A-372180 describes a slide-ruler implement for translating between arabic numerals and a hole pattern code.

There is also a wealth of pocketable electronic notebooks and data bases commercially available nowadays, into which a remarkably large number of data may be stored and accessed by digitization of a personal code. However these electronic appliances are relatively expensive, relatively cumbersome to carry and intrinsically fragile. Therefore it is a common practice to write down the more essential personal codes in carefully selected recessed corners of personal documents which are commonly carried along, such as drive licenses, identity cards, passports, etc., resorting to more or less cunning tricks and forms of recording in order to disguise the notations and complicate "decoding" by ill-motivated persons which may come in possession of such recording "supports".

It is an object of the present invention to provide a low cost support for recording a certain number of confidential personal codes, which may be carried along as a personal card, onto which personal codes may be handwritten "in clear" and which may be "retraced" and read "in clear" only upon the "composition" of a single, self-attributed, "access" code. Notwithstanding the fact that such a memo-card has the confidential codes written on it, the latter practically cannot be "decoded" by an extraneous person which may accidentally or purposely come into possess the memo-card without knowing the secret code for correctly reading it.

The article is relatively inexpensive because it may produced by plastic molding at very low cost. This aspect, coupled with the peculiar utility of the memo-card object of the present invention which may easily be expected to have a constant and lasting use by a person owing it, makes the memo-card an extremely valuable support for publicity when produced and freely distributed by enterprises and corporations as a promotional article bearing the producer's logo and/or messages.

Basically the combinative slide card of the present invention as defined by claim 1 has a front mask piece and a rear piece, which may have a substantially rectangular shape, joined together along two opposite sides, e.g. along the top and bottom edges thereof so as to leave a certain space therebetween for slidingly accommodating at least two parallel and adjacently slidable card inserts. The front mask piece of the assembly has at least a first reading window for data which may be inscribed at least partially on a first insert and at least partially on a second insert, substantially in a direction of inscription orthogonal to the sliding direction of the inserts, and at least a number of other windows equal to the number of the sliding inserts. Through these other windows formed in the front mask piece of the card projectively over a respective slidable insert, a certain character (letter or digit) of a series of characters which may be permanently printed on the respective insert along the sliding direction thereof may be made visible by positioning the slidable insert. Each character thus defines a certain relative position of the slidable insert in respect to the fixed portions of the card, i.e. the front mask piece thereof. The alignment of the portions of data written transversally on the sliding inserts, in order to univocally compose a certain complete data, is determined by positioning each insert so as to read through the respective windows the series of characters which compose a secret access code which is self-attributed by the card user when inscribing its own data in certain boxes into which is subdivided the writable surface of the sliding inserts. All the other writing boxes present on the surface of the slidable inserts, not utilized for inscribing the personal codes to be memorized, may be filled in with randombly chosen characters, letters and/or digits, so as to present the inscription on the inserts, as a whole, as a casual assembly of characters; letters and/or numbers practically undecodable if one does not know the self-attributed secret code for attaining the correct relative alignment of the series of inscribed boxes spanning across the surfaces of the sliding inserts. The large number of possible combinations ensures a practical impossibility of decoding.

**Figure 1** is a schematic, perspective view, partially sectioned, of a combinative slide card object of the present invention.

**Figure 2** shows the front mask piece of a combinative slide card of the invention.

**Figure 3** shows the rear face of a combinative slide card of the invention.

**Figure 4** shows the rear face of two sliding inserts and of two spacers used in the card assembly.

**Figure 5** is a front view of the two sliding inserts shown in Fig. 4.

With reference to the figures, the combinative slide card has a front mask piece 1 and a back or rear piece 2, both having a substantially rectangular shape. They are placed one on the other and joined together permanently along two parallel opposite sides thereof while leaving a certain separation distance therebetween. A certain separation distance between the front and rear piece joined together may be easily ensured by sandwiching two spacers strips 3 and 4 between the two pieces along the bond sides. The parts which make up the card may be made of a heat-weldable molded plastic material or of cardboard pieces bonded together by means of glue or of any other sheet material which may be easily bonded together by welding or glueing.

Two slidable card inserts 5 and 6 of the same length of the card are slidingly inserted in the card, one parallel to the other. The sliding inserts may have slots or indentations 7 which may be accessed through purposely made indentations 8 formed on the respective sides of at least the rear piece 2 of the card. The two sliding inserts 5 and 6 may be made with the same material of the other parts of the card or of a different material. Suitable beads and indentations cooperating among each other (not shown in the figure), may be formed on the slidable inserts and on the internal surfaces of the front and rear pieces of the card for preventing the sliding inserts to accidentally come out of the card without exerting a sufficient pulling action by the user, in accordance with fabrication and assembly techniques which are known to a skilled technician.

At least the front face of the two sliding inserts 5 and 6 may be written on it by means of a ball-point pen or felt pen or with any other writing implement, in a substantially undeletable manner so as to make easy to inscribe characters within square boxes of regular size into which the writable surface of the sliding inserts is divided. In case a plastic sheet material is used for making the inserts, the surface to be written on, preferably defined by permanently printed lines which divide the surface into writable square boxes may be provided with a satin finish for attaining writability by means of a common ball-point or felt pen or with any other writing instruments, or suitability to retain transferable characters.

The front mask piece 1 of the card is provided with at least a reading window 9 having a substantially rectangular shape, through which a portion of the writable surfaces, subdivided in square boxes, of the two sliding inserts 5 and 6 is visible. The front mask piece 1 is provided with two other smaller windows 10 and 11, through which a certain character (number) of a series of characters (numbers), permanently printed on the front face of the sliding inserts, respectively, and aligned essentially in the sliding direction thereof, may be made visible by appropriately positioning the relative sliding insert.

The exposition of a certain character (number) of the respective series of characters (numbers) printed on a sliding insert through the respective window of the front mask piece of the card, ensures an univocal positioning of the sliding insert in respect to the fixed mask piece of the card.

The manner in which the combinative slide card may be organized is easily understood. On a virgin (not yet inscribed) combinative slide card, the owner will self-attribute to himself a certain secret personal code by choosing any combination of characters (letters and/or numbers) which may be combiningly exposed through the windows 10 and 11 by individually sliding the inserts 5 and 6 to the unique relative position. While the two sliding inserts are set in this arbitrarily defined relative position, corresponding to the composition of the self-attributed personal code, through the reading window 9 a certain portion of boxes traced on the writable surface of the two sliding inserts 5 and 6 will be visible. On each of these transversal "columns" of aligned boxes a certain confidential personal code to be memorized may be written, utilizing for each code a certain "column" of writing boxes, which may be identified by a certain letter or number permanently printed along the top and/or bottom margin of the reading window 9. Of course, as many columns of boxes as necessary may be used for inscribing the series of codes to be recorded. It is not strictly necessary that the number of characters (letters or numbers) of the code to be recorded be such as to fully occupy all the boxes of a "column". If necessary the boxes in eccess of what is needed may be filled in with nonsignificant conventional characters. In any case it is useful that the code to be recorded on the memo-card be composed of characters written in aligned boxes belonging to more than one single slidable insert, so that the code may be composed for reading it by appropriately aligning the slidable inserts used in the combinative slide card.

Once the writing of all the codes to be recorded on the combinative slide card is terminated, the boxes on the slidable inserts which have not been utilized may be filled in with characters (letters and/or numbers) so as to form strings having a similar aspect to that of the recorded codes. At this point the combinative slide card will have all the writable boxes filled in with numbers and/or letters in a substantially undecodable manner. Only by knowing the secret access code and by composing it through the respective windows 10 and 11, the correct alignment of the boxes of one insert with the boxes of the other insert will be established and the inscribed personal codes may be easily read. The identification of all the columns of boxes which are readable through the read window 9 will provide a record of the various associations between a certain personal code and a certain column of boxes where the code is inscribed. These notations may be inscribed in appropriately provided "label" areas or boxes of the front or rear surface of the slide card. Although the slide card shown in the figure utilizes two slidable inserts, it is easily understood that a combinative slide card may also utilize three or more slidable inserts, by providing an equal number of windows through which the self-attributed access code may be composed. In case the number of inserts and of such windows is greater than two, the windows may be arranged in a column along a vertical side of the read window or they may also be formed through the rear piece 2 of the card, through which characters purposely printed on the back of the respective slidable inserts may be exposed.

As already said the "column" along which a certain personal code may be read may be identified by recording the type of code and the corresponding column containing it inside writable boxes defined on the surface of the front mask piece and/or the surface of the rear or back piece or the card. This indication does not materially affect produce security because the actual codes remain difficult to decode by an extraneous person.

The combinative slide card of the present invention may be produced by plastic molding, has a light weight and may be kept in a wallet like any credit card.

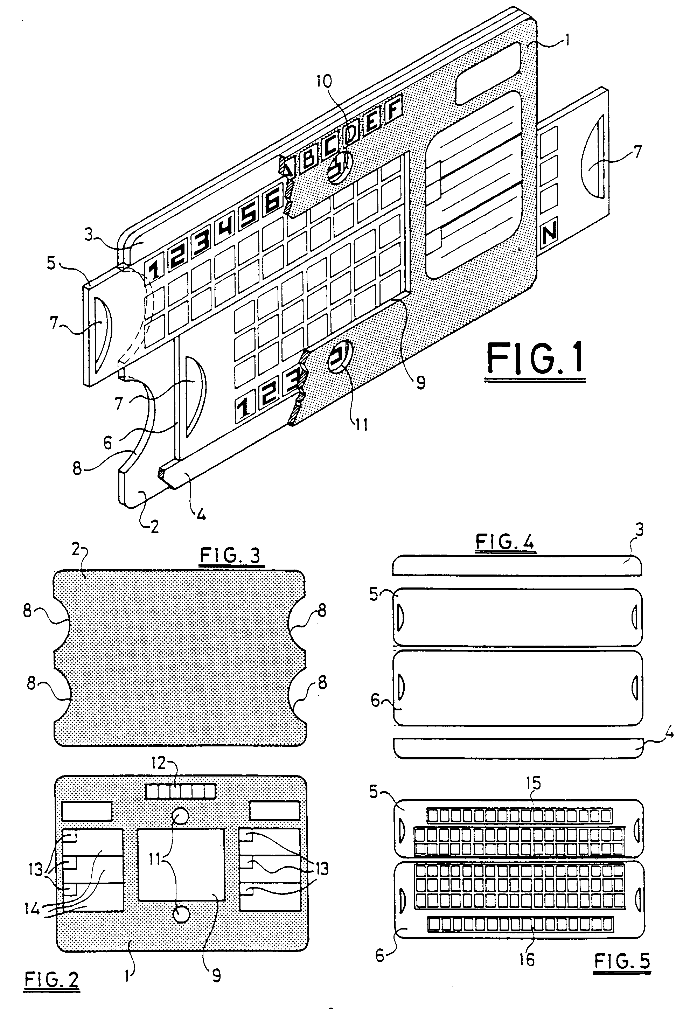

The series of Figures 2, 3, 4 and 5 show an embodiment of the slide card of the invention.

In the example shown in the figures, the front mask piece 1 is provided with a rectangular reading window 9, surmounted by six "boxes" 12, inside which a certain character is permanently printed. Each character of the six boxes 12 is also permanently printed in a corner box 13 of an equal number of label boxes 14. The two circular windows 10 and 11 serve to compose a secret, self-attributed code which may be formed by two characters, each one being chosen from the available characters which are permamently printed or written in a series of boxes 15 and 16, respectively, of the two slidable inserts 5 and 6, as shown in Fig. 6. The rear piece 2, shown in Fig. 3, is provided with indentations 8 for permitting the manouvering of the two slidable inserts 5 and 6, the rear face of which is shown in Fig. 4, together with two spacing strips 3 and 4 which are interposed between the bond surfaces of the front and rear pieces. In the example shown in the figures, six codes formed by five characters may be recorded.

Of course, the relative dimensions of the slide card and the handling orientation thereof may be different. The permamently printed characters (numbers and/or letters on the sliding inserts and on the front and/or rear pieces of the card may be rotated by ninety degrees and so may be also the the codes and of the non-significant characters written in the respective writing boxes traced on the card's inserts so that the personal codes may be written on composable "rows" of writing boxes (instead of "columns") and be read horizontally across the positionned sliding inserts. Moreover, the writing boxes as well as the permanently printed boxes traced on the card surfaces may also be filled with or contain more than one single character, e.g. two characters per each box.

## Claims

1. Combinative slide card for manually recording personal data which may be retrieved and read by composing or setting a self-attributed secret code, which card comprises
a front mask piece (1) and a back piece (2) placed one on the other and joined together along two opposite sides thereof;
at least two slidable card inserts (5,6), slidingly inserted in a space between said front mask piece and said back piece, one adjacent to the other;
said front mask piece (1) having at least a first reading window (9) through which a portion of the surface of said slidable inserts is visible for reading said data written partially on a first insert and partially on another of said slidable inserts along a direction of inscription orthogonal to the slidingly direction of said inserts; and
a number of other windows (10,11) equal to the number of said slidable inserts, formed through said front mask piece (1) and/or said back piece (2), through which at least one character of a series of characters printed on the inserts (5,6) along the slide direction thereof may be made visible thus determining an univocal relative position of said slidable inserts (5,6);
the alignment of the portions of data inscribed on said slidable inserts (5,6) for recomposing a certain personal data recorded occurring upon the positioning of each slidable insert (5,6) so as to compose through said other windows (10,11) said self-attributed secret code.

2. The combinative slide card according to claim 1, characterized by being constructed with plastic sheet material.

## Patentansprüche

1. Karte mit Schieber und Code zur manuellen Speicherung von persönlichen Daten, die durch Einstellung eines selbst ausgewählten Geheimcode wieder gelesen werden können
die Karte besteht aus einer Stirn- (1) und einer Rückseite (2) die an den Längsseiten zusammen verbunden sind;
mindestens zwei Schieber (5,6) die zwischen Stirn- und Rückseite der Karte verschoben werden können
auf der Stirnseite (1) befindet sich mindestens ein Code-Fenster (9) durch das man die Zahlen auf dem Schieber lesen kann Die persönlichen Daten werden teils auf den einen, teils auf den anderen Schieber geschrieben;
die Karte hat zumindest soviele Lese-Fenster (10,11) wie die Schieber sowohl auf der Stirn- (1) als auch auf der Rückseite (2), durch diese Fenster kann man mindestens ein auf dem Schieber (5,6) gedrucktes Schriftzeichen lesen Die lesbaren Zeichen ergeben somit eine eindeutige Stellung der Schieber (5,6) relativ zueinander;
um die gespeicherten persönlichen Daten lesen zu können muß man die Schieber (5,6) so verschieben daß in den Fenstern (10,11) der selbst ausgewählte Geheimcode erscheint Die Schieber (5,6) erreichen somit die relativ zueinander richtige Stellung damit man in den Lese-Fenstern die persönlichen Daten lesen kann.

2. Die Karte besteht aus 1, Kunststoff-Verbundplatte.

## Revendications

1. Carte à combinaison pour l'enregistrement manuel de données personnelles pouvant être récupérées et lues en composant ou en réglant un code secret que le titulaire s'attribue lui-même, carte qui comprend
un élément frontal à masque (1) et un élément arrière (2) superposés et unis l'un l'autre le long des deux côtés parallèles;
deux cartes coulissantes au moins (5, 6) introduites de manière à glisser dans l'espace entre ledit élément frontal à masque et ledit élément arrière, l'une adjacente à l'autre;
ledit élément frontal à masque (1) présentant une première fenêtre de lecture au moins (9) à travers laquelle une portion de la surface desdites cartes coulissantes est visible pour la lecture desdites données inscrites en partie sur une première carte insérée et en partie sur une autre desdites cartes coulissantes le long d'une direction de l'inscription orthogonale par rapport à la direction de coulissage des cartes insérées; et
un certain nombre d'autres fenêtres (10,11) égal au nombre desdites cartes coulissantes insérées formées à travers ledit élément frontal à masque (1) et/ou l'élément arrière (2), à travers lesquelles un caractère au moins de la série de caractères imprimée sur les cartes coulissantes insérées (5,6) le long de la direction de coulissage, peut être rendu visible déterminant ainsi une position relative univoque desdites cartes coulissantes (5,6)
l'alignement des portions de données inscrites sur lesdites cartes coulissantes (5, 6) pour composer une certaine donnée personnelle, se produisant grâce au positionnement de chaque carte coulissante (5, 6) de manière à composer à travers lesdites autres fenêtres (10, 11) ledit code secret que le titulaire de la carte s'est attribué.

2. La carte coulissante à combinaison se caractérise, conformément à la revendication 1 par le fait qu'elle est construite en laminé plastique.
